# EUROPÄISCHE PATENTSCHRIFT

(11) **EP 0 872 005 B1**
(45) Veröffentlichungstag und Bekanntmachung des Hinweises auf die Patenterteilung: **06.10.1999**
(21) Anmeldenummer: 96904818.0
(22) Anmeldetag: 19.02.1996
(51) Int. Cl.: H02K 1/14

(54) **LAMELLE FÜR ELEKTRODYNAMISCHE MASCHINEN**
PLATE FOR ELECTRODYNAMIC MACHINES
LAMELLE POUR MACHINES ELECTRODYNAMIQUES

(30) Priorität: 18.05.1995 DE 19518286; 03.01.1996 WO PCT/EP96/00002
(43) Veröffentlichungstag der Anmeldung: 21.10.1998
(73) Patentinhaber: ANTRIEBSTECHNIK GERHARD GEIGER GmbH & Co., 74321 Bietigheim-Bissingen (DE)
(72) Erfinder: GRÜDL, Josef, D-74369 Löchgau (DE)
(74) Vertreter: Jeck, Anton, Dipl.-Ing.
(86) Internationale Anmeldenummer: EP9600687
(87) Internationale Veröffentlichungsnummer: WO9637029

(56) Entgegenhaltungen:
- EP-A- 0 235 597
- EP-A- 0 562 505
- GB-A- 2 082 400
- US-A- 3 440 460

## Beschreibung

Die Erfindung betrifft eine Lamelle nach dem Oberbegriff des Anspruches 1.

Eine derartige Lamelle ist in der US-A-3 440 460 beschrieben.

Solche Lamellen sind z.B. such in der japanischen Patentanmeldung 5-236682 offenbart und werden zur Herstellung eines aus mehreren ringförmigen Blechlamellen aufgebauten Blechpakets für elektrodynamische Maschinen verwendet. Im bekannten Falle sind die Öffnungen im Bereich der radialen Enden der Schenkel angeordnet und mittels eines geschlossenen Ringes mit Vorsprüngen abgeschlossen. Dies hat den Nachteil, daß die Ringe zusätzlichen Platz einnehmen und zum anderen separat mit jeder Lamelle verbunden werden müssen. Ähnlich verhält es sich auch mit Lamellen, wie sie in der US-A-5 187 858 beschrieben sind. Schließlich ist in der US-A-6 28 377 ein Stator-Paket für elektrodynamische Maschinen offenbart, dessen Öffnungen mittig ausgebildet und mittels eines Zylinders abgeschlossen sind. Radialseitig weisen die Wickelnuten Öffnungen für den magnetischen Fluß auf. Hierdurch wird der Magnetfluß deutlich verbessert.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn es sich um eine Lamelle handelt, bei der die Öffnungen zum Wickeln in bezug auf die Wicklungsnuten asymmetrisch angeordnet und im Bereich der freien Enden der radial ausgerichteten Schenkel ausgebildet sind. Der jeweils umfangseitig sich erstreckende Schenkel bzw. der radialseitig sich erstreckende Arm bestehen hierbei aus biegsamen Werkstoff, z.B. Stahl, und können nach Bewicklung des Statorpaketes so gebogen werden, daß die Nuten geschlossen sind. Dadurch erübrigen sich Ringe. Zudem wird auch das Außenmaß des Stators zumindest um die radiale Dicke des Ringes verringert. Die einander zugekehrten Enden der Arme und der Schenkel können zusätzlich, z. B. durch Schweißen oder Löten, verbunden werden.

Ein wesentlicher Vorteil der vorgeschlagenen Maßnahmen besteht folglich in der Verringerung der Einzelteile, Minimierung der Außenmaße des Stator-Pakets und dem einfachereren Zusammenbau und der Bewicklung des Stator-Pakets. Denn nach der Bildung des Stator-Pakets werden die Wicklungsnuten vorzugsweise mit Isolierwerkstoff ausgekleidet, und zwar in einem einzigen Verfahrensschritt. Sodann wird das Stator-Paket automatisch bewickelt, und schließlich werden die Öffnungen für die Bewicklung durch Biegen der Schenkel und/oder der Arme geschlossen. Im Bedarfsfalle können noch die einander zugekehrten Enden der Schenkel und der Arme miteinander fest verbunden werden, z.B. durch Schweißen, Löten, Kleben oder dergleichen. Dieser Vorgang ist technisch deutlich einfacher zu verwirklichen als das Stator-Paket mit einem gemeinsamen Ring oder separaten Ringen zu versehen, durch die die Öffnungen üblicherweise geschlossen werden. Im Zuge der Auskleidung der Wicklungsnuten können gleichzeitig auch axial-endseitig angeordnete Hohl-Schafte angespritzt werden, durch welche die Bewicklung vereinfacht wird. Für solche Zwecke wird regelmäßig Isolierwerkstoff eingesetzt, der nach dem Spritzvorgang aushärtet, den magnetischen Fluß jedoch nicht merklich beeinflußt. Schließlich kann zur Verbesserung des Magnetflusses die mittige Öffnung der Lamellen so vergrößert werden, daß zwischen der Öffnung und den jeweiligen Wicklungsnuten keine metallische Barriere mehr vorhanden ist, die den Magnetfluß beeinträchtigen kann. In diesem Fall werden einander benachbarte Segmente durch den Isolierwerkstoff zusammengehalten. Nach der Bewicklung erhält der Benutzer ein einsatzfähiges und bewickeltes Stator-Paket, wobei alle Herstellungsschritte, vom Stanzen der Lamellen angefangen und mit Vergrößerung des Innendurchmessers der Öffnung endend, automatisch erfolgen können.

Weitere zweckmäßige und vorteilhafte Ausgestaltungen der Erfindung gehen aus den Unteransprüchen hervor.

Eine besonders zweckmäßige Ausgestaltung sieht vor, daß die Arme und/oder die Schenkel aus biegsamen Werkstoffen bestehen. Durch diese Maßnahmen wird erreicht, daß die Wicklungsnuten der zu einem Paket zusammengefaßten Lamellen z.B. durch Schweißen vollständig geschlossen werden können. Man erhält eine Lamelle, bei welcher die Wicklungsnuten geschlossen sind und somit die Festigkeit der Lamelle merklich erhöhen.

Eine weitere zweckmäßige Ausgestaltung der Erfindung sieht vor, daß die Öffnungen in Form von radial sich erstreckenden Schlitzen ausgebildet sind, was eine einfache Bewicklung der Lamellen ermöglicht. Ferner ist vorgesehen, daß die radial ausgerichteten Schenkel in ihrem Innenbereich geschlitzt sind. Durch diese Maßnahmen kann eine Kontaktierung der einander zugekehrten Enden der Schenkel und der Arme problemlos erreicht werden. Eine weitere zweckmäßige Ausgestaltung sieht, daß die umfangseitig sich erstreckenden Arme Sollbiegestellen aufweisen. Durch diese Maßnahmen kann ebenfalls eine schnelle Verbindung zwischen den Endpartien der Schenkel und Arme hergestellt werden.

Eine besonders zweckmäßige Ausgestaltung der Erfindung sieht vor, daß die umfangsseitig sich erstreckenden Arme aus jeweils zwei Schenkeln bestehen, zwischen denen jeweils ein Schlitz ausgebildet ist, wobei der äußere Schenkel auf den inneren Schenkel zu unter Schließung der Öffnung biegbar ist. Dabei ist es zweckmäßig, wenn der Schlitz sich nach innen zu verjüngt. Im Rahmen dieses Erfindungsgedankens ist es besonders vorteilhaft, wenn im Verbindungsbereich der Schenkel Soll-Biegestellen für die äußeren Schenkel ausgebildet sind und wenn im gebogenen Zustand der äußeren Schenkel die äußeren Schenkel sowohl mit den inneren Schenkeln als auch mit den radial ausgerichteten Schenkeln, die sich zu ihren freien Enden hin verjüngen, unter Bildung eines Kanals für eine Schweißnaht formschlüssig miteinander verbindbar sind. Durch diese Maßnahmen wird erreicht, daß die Form der Wicklungsnut nicht verändert wird, und zwar nicht einmal dann, wenn die äußeren Schenkel gebogen wurden. Zu einer Beschädigung der Wicklungsdrähte kann es daher nicht kommen.

Ferner sieht eine zweckmäßige Ausgestaltung der Erfindung vor, daß die Wicklungsnuten mit Isolierwerkstoff ausgekleidet sind, wobei die Wicklungsnuten in radialseitige und mit Isolierwerkstoff ausgefüllte Nuten übergehen, die sich bis zur Öffnung hin erstrecken. Durch diese Maßnahmen wird eine elektrisch kontaktfreie Verbindung zwischen dem Wicklungsdraht und den Lamellen erreicht. Eine besonders zweckmäßige Ausgestaltung der Erfindung sieht vor, daß die mit Isolierwerkstoff ausgefüllten Nuten jeweils zwei benachbarte Segmente betrieblich miteinander verbinden. Durch diese Maßnahme wird erreicht, daß der magnetische Fluß von den Wicklungsnuten in die Öffnung ungehindert erfolgt.

Die Erfindung betrifft auch ein Verfahren zur Herstellung solcher Lamellen. Dabei wird so vorgegangen, daß zunächst ein Lamellenrohling mit Wicklungsnuten sowie gegebenenfalls Nuten hergestellt wird. Daraufhin werden die Lamellen zu einem Stator-Blechpaket zusammengefaßt und die Wicklungsnuten sowie die Nuten mit geeigentem Isolierwerkstoff ausgekleidet bzw. ausgefüllt und bewickelt. Ferner wird die mittige Öffnung in ihrem Durchmesser so vergrößert, daß der die Segmente zusammenhaltende Ring-Steg beseitigt wird und die mit Isolierwerkstoff ausgekleideten Nuten, die im Querschnitt vorzugsweise rechteckförmig sind, sich bis zur Öffnung hin erstrecken. Schließlich werden die einander zugekehrten Enden der Arme und der Schenkel durch Biegen aufeinander zu verbunden.

Einige Ausführungsbeispiele der Erfindung sind in der Zeichnung schematisch dargestellt und werden im folgenden näher erläutert. Es zeigen
- Fig. 1: einen Lamellenrohling,
- Fig. 2: die in Fig. 1 dargestellte Lamelle mit Isolierwerkstoff ausgekleideten Wicklungsnuten,

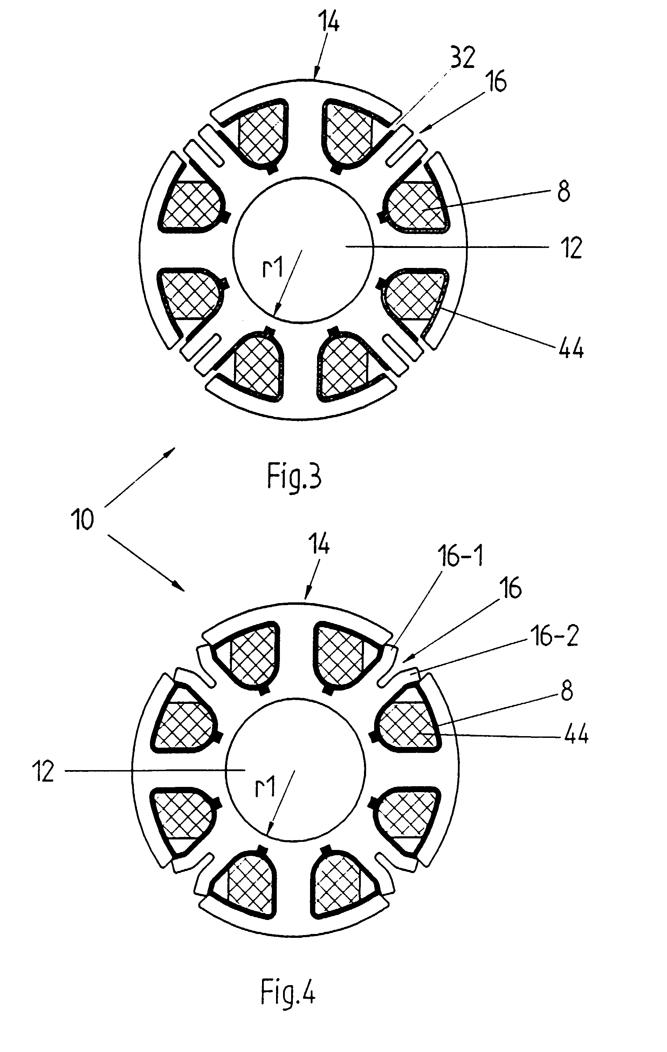

- Fig. 3: die in Fig. 2 dargestellte Lamellen mit bewickelten Wicklungsnuten,
- Fig. 4: die in Fig. 3 dargestellte Lamelle, wobei die einander zugekehrten Enden der Schenkel und Arme und abstandsfrei zueinander angeordnet sind,
- Fig. 5: die in Fig. 4 dargestellte Lamelle, wobei die in Kontakt stehenden Arme und Schenkel durch Schweißen verbunden sind,
- Fig. 6: die in Fig. 5 dargestellte Lamelle, bei der die mittige Öffnung auf einen Radius r₂ vergrößert wurde,
- Fig. 7: eine weitere Lamelle,
- Fig. 8: die in Fig. 7 dargestellte Lamelle mit gebogenen Armen,
- Fig. 9: einen Ausschnitt einer Lamelle vergrößert dargestellt.
- Fig. 10: ein Stator-Blechpaket aus Lamellen, wie sie in Fig. 7 dargestellt sind,

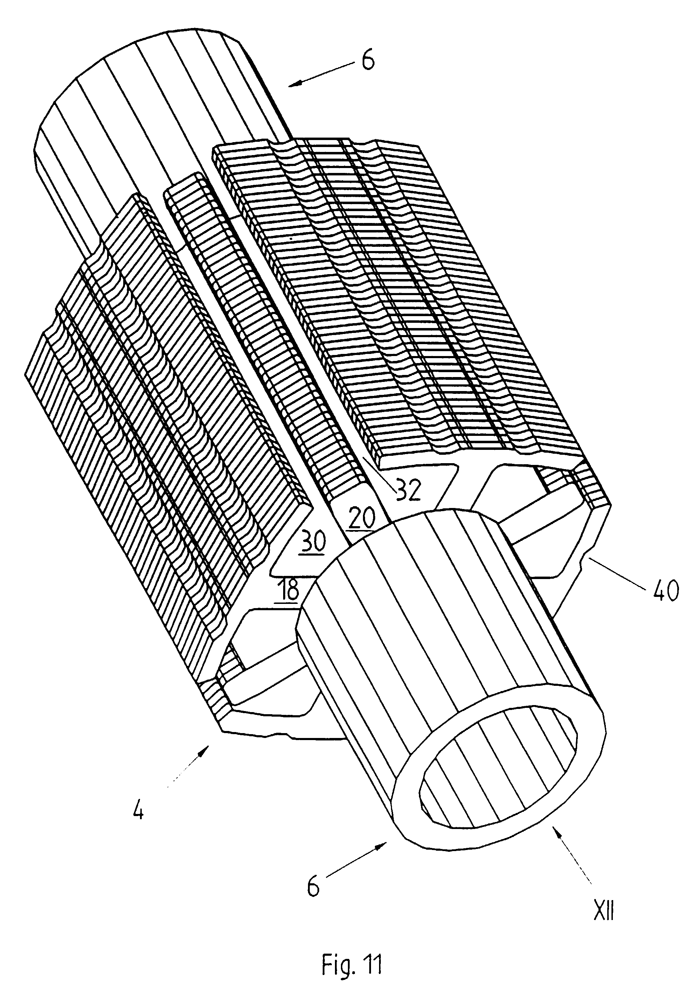

- Fig. 11: das in Fig. 10 dargestellte Stator-Blechpaket mit ausgekleideten Wickel nuten und angespritzten Schaften,

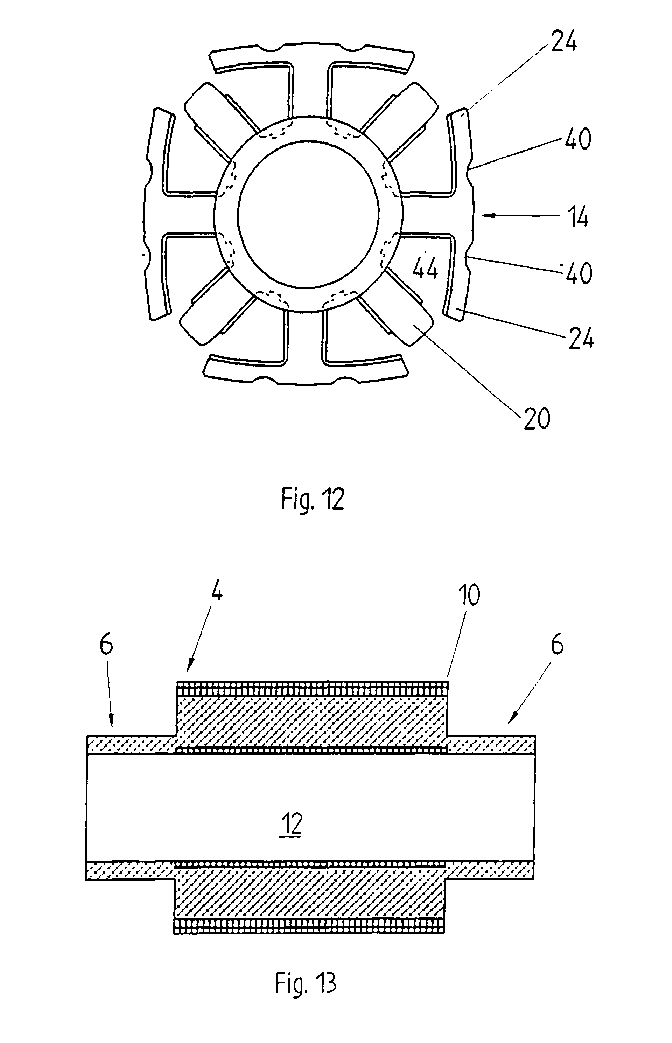

- Fig. 12: eine Ansicht in Richtung des Pfeiles XII nach Fig. 11,
- Fig. 13: einen Axialschnitt durch das Stator-Paket nach Fig. 11.
- Fig. 14: ein weiteres Stator-Blech-Paket in perspektivischer Ansicht,
- Fig. 15: eine Ansicht in Richtung des Pfeiles XV nach Fig. 14,
- Fig. 16: den mit XVI bezeichneten Teil nach Fig. 15 vergrößert dargestellt und
- Fig. 17: den mit XVII bezeichneten Teil nach Fig. 15 vergrößert dargestellt.

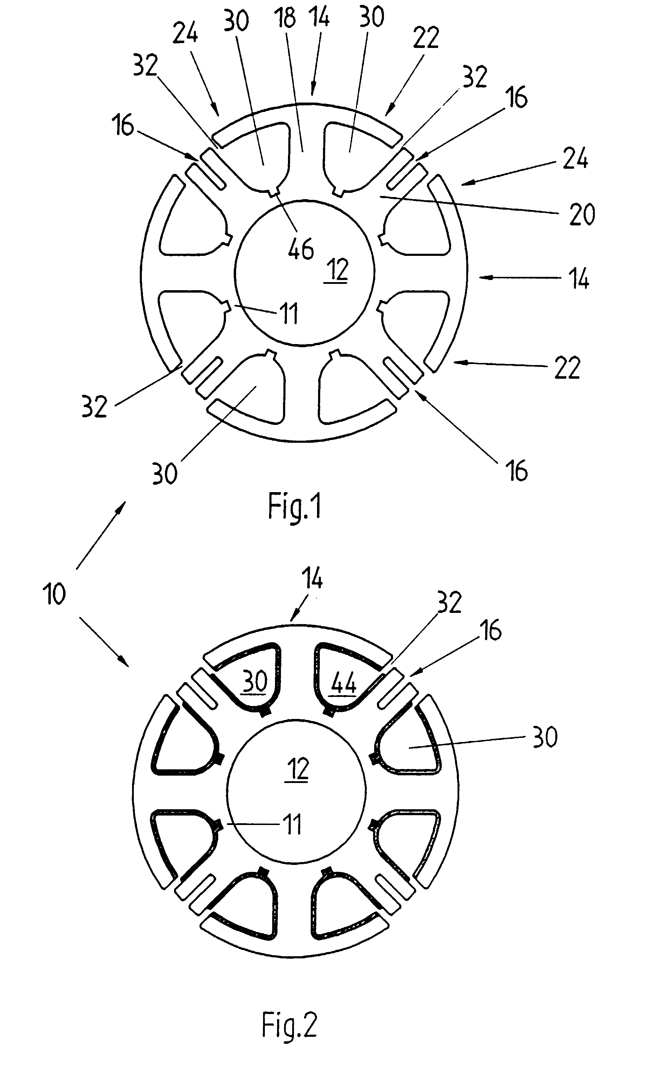

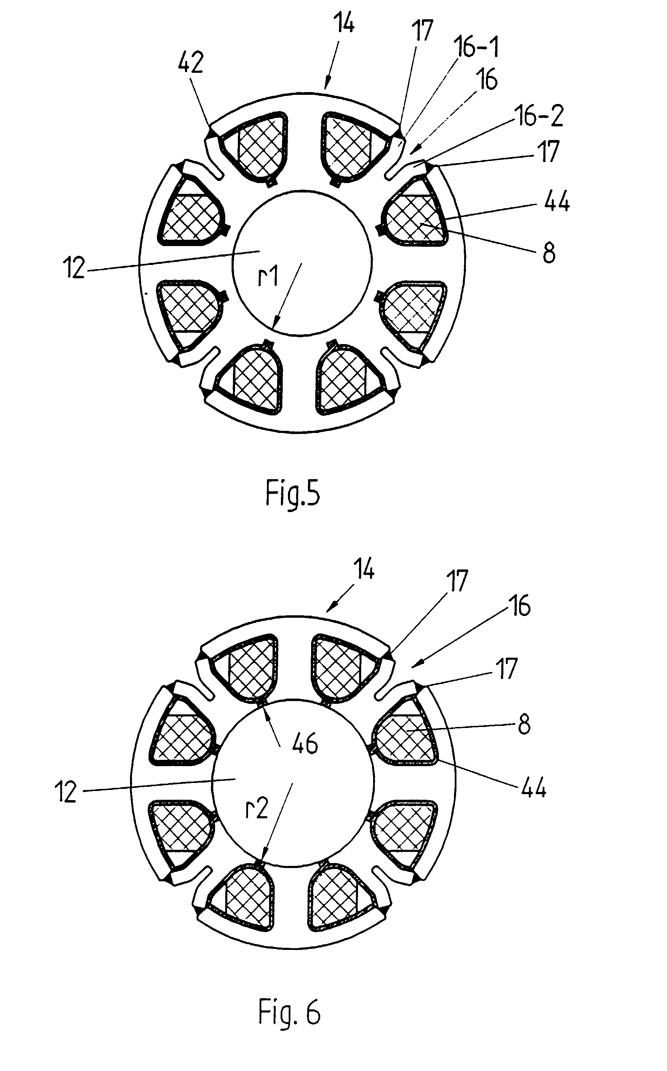

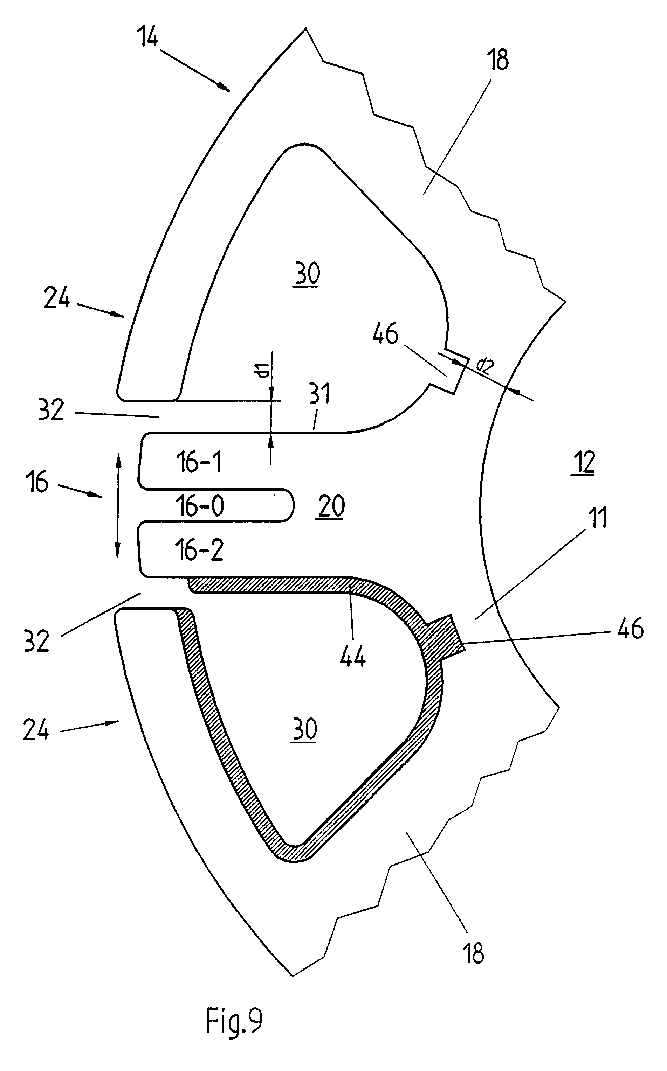

Aus Fig. 1 in Zusammenhang mit Fig. 9 geht eine Lamelle 10 für den magnetischen Kreis einer elektrodynamischen Maschine hervor. Dabei sind eine mittige Öffnung 12 sowie um diese Öffnung herum angeordnete und miteinander durch nichtmagnetischen bzw. elektrisch nicht leitenden Werkstoff verbundene Segmente 14, 16 vorgesehen. Die Segmente 14, 16 sind mit radial ausgerichteten und gegebenenfalls umfangseitig sich erstreckende Arme 22, 24 aufweisenden Schenkeln 18, 20 versehen, die radial außenseitig zugängliche Wicklungsnuten 30 mit Öffnungen 32 definieren. Die Öffnungen 32 sind im Bereich der freien radialen Enden der Schenkel 20 ausgebildet. Die Arme 22, 24 sowie die Schenkel 18, 20 sind aus biegsamen Werkstoff ausgebildet. Die Breite d1 der Öffnungen 32 ist größer als die Dicke des nicht näher dargestellten Wicklungsdrahtes. Ferner ist zu erkennen, daß die Öffnungen 32 in Form von radial sich erstreckenden Schlitzen ausgebildet sind, so daß der Wicklungsdraht entlang der Innenwand 31 der Wicklungsnut 30 geführt werden kann. Die radial ausgerichteten Schenkel 20 sind in ihrem Endbereich geschlitzt und können problemlos umgebogen werden. Vor der Wicklung werden die Wicklungsnuten 30 mit Isolierwerkstoff 44 ausgekleidet, wie z.B. in Fig. 2 dargestellt. Ferner ist zu erkennen, daß die Wicklungsnuten 30 in radialseitige und mit Isolierwerkstoff 44 ausgefüllten Nuten 46 übergehen, die zunächst von der mittigen Öffnung 12 einen Abstand d₂ aufweisen. In diesem Stadium hat die Öffnung 12 der Lamelle 10 einen Innendurchmesser r₁. Nach der Bewicklung und Schließung der Schlitze wird dieser Innendurchmesser r₁ vergrößert, und zwar auf einem Wert r₂ (vgl. Fig. 6), so daß die mit Isolierwerkstoff 44 ausgefüllten Nuten 46 die Wicklungsnuten 30 mit der mittigen Öffnung 12 verbinden. Dadurch wird erreicht, daß der Magnetfluß nach innen zu, in die mittige Öffnung 12, gewährleistet ist.

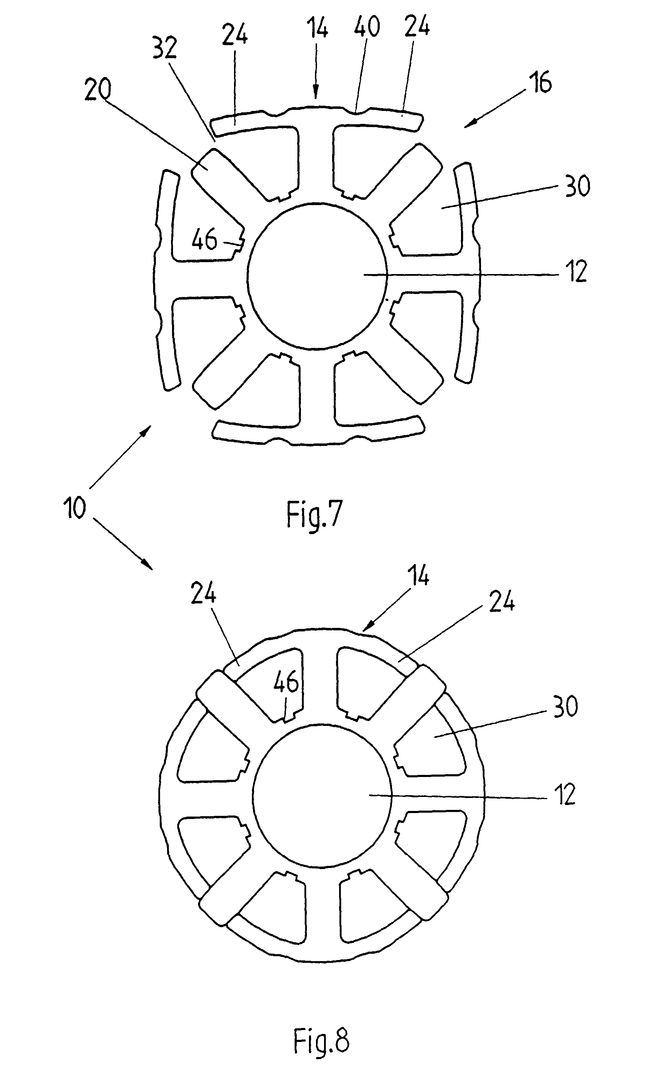

In den Fig. 7 und 8 ist eine Lamelle dargestellt, deren Arme Sollbiegestellen 40 aufweisen und nach Wicklung der Lamellen zu den freien Enden der Schenkel 20 gebogen werden. Bei den Lamellen handelt es sich um Stanzteile, bei denen die Segmente 14, 16 abwechselnd T-förmig und zahnförmig mit Schlitzen 16-0 ausgebildet sind. Die den Schlitz 16-0 flankierenden Abschnitte 16-1 und 16-2 können nach Bewicklung der Wicklungsnuten 30 zu den freien Enden der Arme 24 hin gebogen und mit diesen z.B. durch Schweißen verbunden werden.

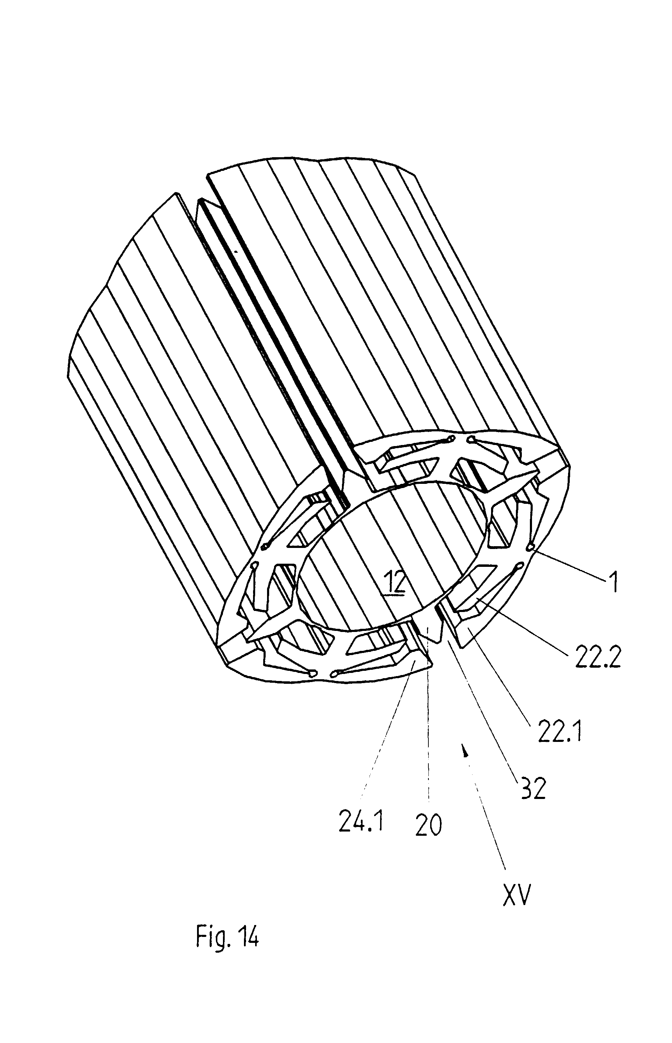

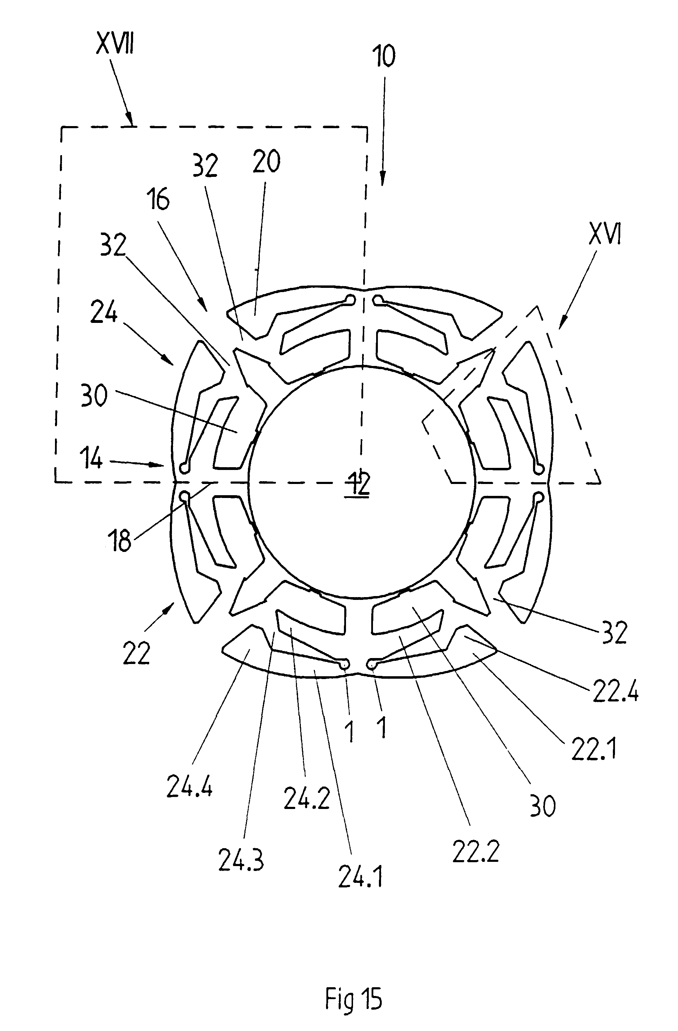

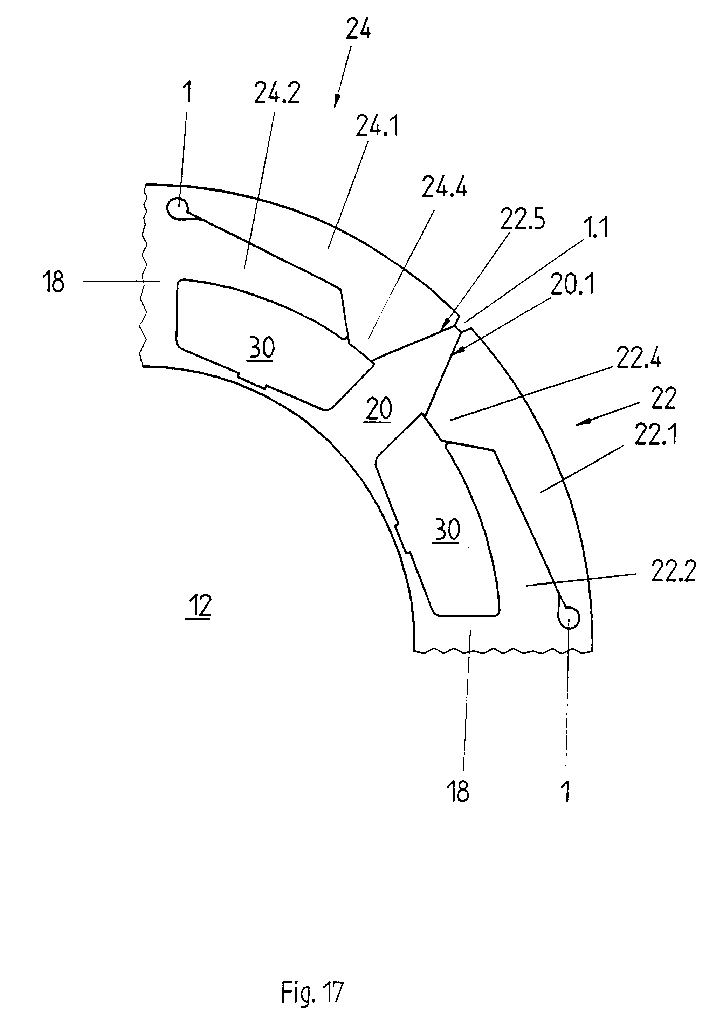

In den Figuren 14 bis 17 ist ein Stator-Blech-Paket bzw. eine Lamelle des Paketes dargestellt, wobei die Besonderheit dieser Lamelle darin besteht, daß die umfangsseitig sich erstreckenden Arme 22,24 aus jeweils zwei Schenkel 22.1, 22.2 sowie 24.1, 24.2 bestehen, zwischen denen ein Schlitz 22.3 bzw. 24.3 ausgebildet ist, wobei der äußere Schenkel 22.1 bzw. 24.1 auf den inneren Schenkel 22.2 bzw. 24.2 zu gebogen werden kann (vgl. Fig. 17). Dabei wird die Öffnung 32 geschlossen. Der Schlitz 22.3 bzw. 24.3 verjüngt sich nach innen zu, und zwar derart, daß im Verbindungsbereich der Schenkel 22.1, 22.2 bzw. 24.1, 24.2 Soll-Biegestellen 1 der äußeren Schenkel 22.1 und 24.1 ausgebildet sind. Im gebogenen Zustand der äußeren Schenkel 22.1, 24.1 sind die äußeren Schenkel 22.1, 24.1 sowohl mit den inneren Schenkeln 22.2, 24.2 als auch mit den Schenkeln 20, die sich zu ihren freien Enden hin verjüngen, unter Bildung eines Kanals 1.1 für eine Schweißnut formschlüssig miteinander verbindbar. Der Vorteil dieser Ausführungsform besteht darin, daß die mit Isolierwerkstoff ausgekleideten Wicklungsnuten 30 durch Biegen der äußeren Schenkel 22.1, 24.1 nicht verformt werden, da die Form der Wicklungsnuten konstant ist und die inneren Schenkel 22.2, 24.2 nicht gebogen werden, wodurch gewährleistet ist, daß der Isolierwerkstoff sich von der Innenwand der Wicklungsnut 30 nicht löst.

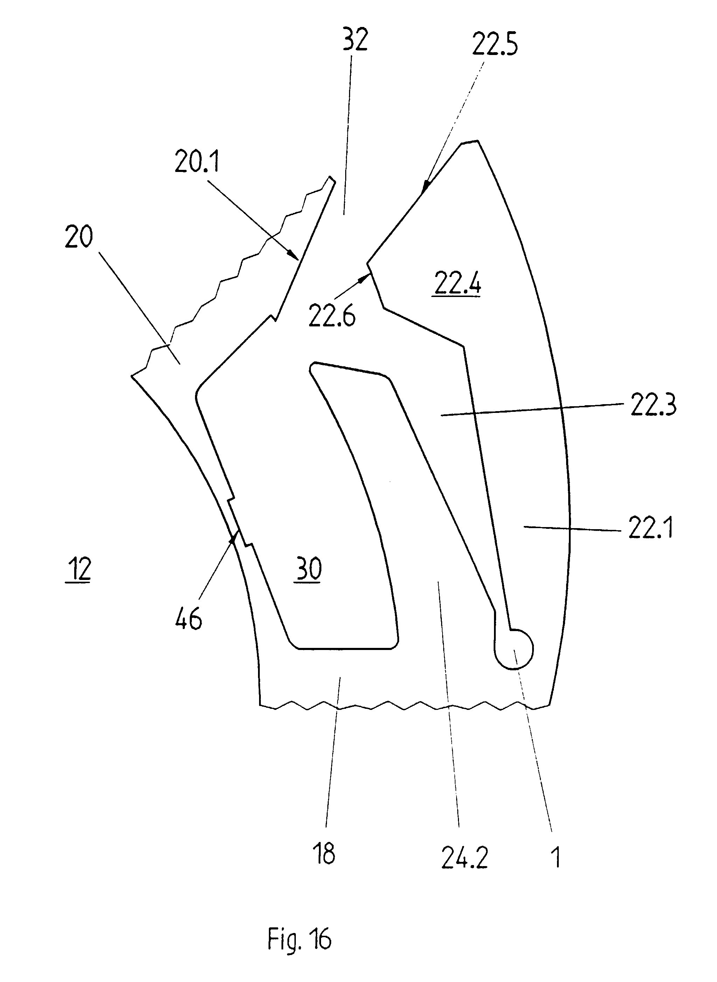

Die Figuren 16 und 17 lassen erkennen, daß die einander zugekehrten Seiten 20.1 und 22.5 in gebogenem Zustander der äußeren Schenkel formschlüssig miteinander verbindbar sind. Dabei schließt die Stirnseite 22.6 des Kopfes 22.4 die eigentliche Öffnung 32 der Wicklungsnut 30. Nach Wicklung des Stator-Paketes und Biegung der Schenkel 22.1 und 24.1 können diese Schenkel im Bedarfsfall im Bereich des Kanals 1.1 verschweißt werden. Aufgrund der besonderen Ausgestaltung dieser Lamelle ergibt sich eine besonders einfache Herstellung des Stator-Pakets und seine problemlose Bewicklung.

Bei der Herstellung der vorgeschlagenen Lamellen wird wie folgt vorgegangen:

Zunächst wird ein Lamellenrohling (Fig. 1) mit Wicklungsnuten und mittiger Öffnung 12, deren Radius r₁ so bemessen ist, daß zwischen der mittigen Öffnung 12 und den Nuten 46 ein Steg 11 ausgebildet ist, z.B. durch Stanzen hergestellt.

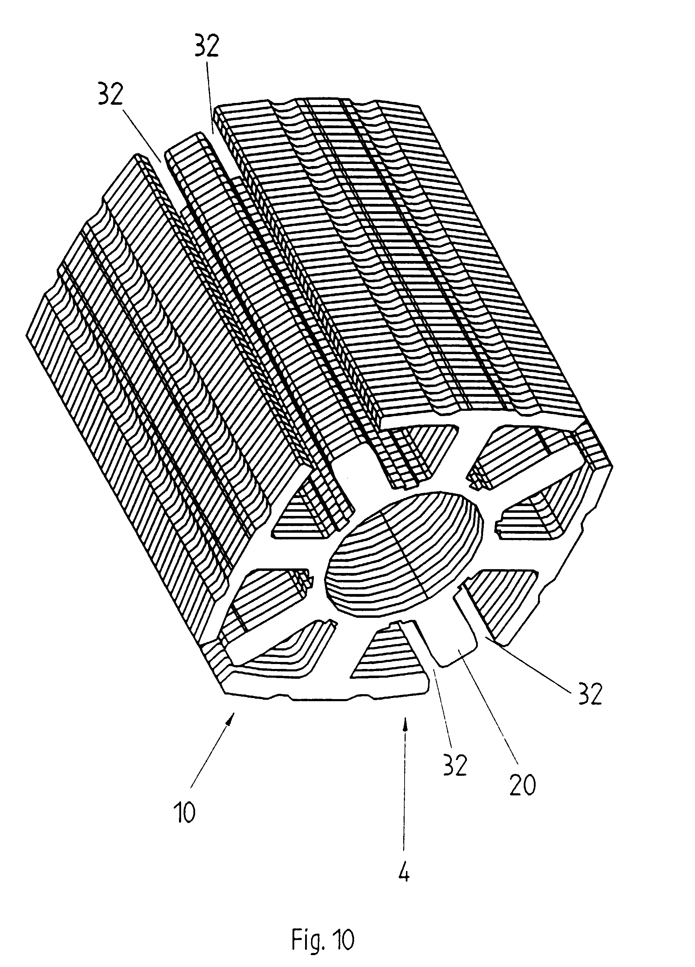

Daraufhin werden mehrere Lamellen zu einem Paket zusammengefaßt (Fig. 10) und die Wicklungsnuten 30 werden mit Kunststoff ausgekleidet. Gleichzeitig werden auch die zwei axial endseitig angeordneten hohlzylindrischen Schafte 6 angespritzt, die das Festhalten des Paketes bei der Wicklung vereinfachen. Anschließend können die radial innenseitigen Stege durch Schneiden, Zerspanen oder Drehen beseitigt werden. Ein solches Lamellen-Blechpaket wird sodann bewickelt, und schließlich werden die Öffnungen 32 durch Biegen der Schenkel 18,20 und/oder der Arme 22,24 geschlossen. Damit erhält man eine kompakte Einheit, die keine Verstärkungsringe oder zusätzlicher Teile mehr bedarf. Bei größeren Statoren kann es zweckmäßig sein, die in Berührung stehenden Schenkel und Arme miteinander fest zu verbinden, z.B. durch Schweißen, Löten oder Kleben.

## Patentansprüche

1. Lamelle (10) für den magnetischen Kreis einer elektrodynamischen Maschine mit einer mittigen Öffnung (12) sowie um diese Öffnung (12) herum angeordneten Segmente (14,16) mit radial ausgerichteten und gegebenenfalls umfangseitig sich erstreckende Arme (22,24) aufweisenden Schenkeln (18,20), die radialaußenseitig zugängliche Wicklungsnuten (30) mit im Bereich der freien radialen Enden der Schenkel (20) ausgebildeten Öffnungen (32) definieren, die durch Biegen der Schenkel (18,20) und/oder der Arme (22,24) schließbar sind,
dadurch gekennzeichnet,
daß die umfangsseitig sich erstreckenden Arme (22,24) aus jeweils zwei Schenkeln (22.1, 22.2; 24.2) bestehen, zwischen denen ein Schlitz (22.3, 24.3) ausgebildet ist, wobei der äußere Schenkel (22.1, 24.1) auf den inneren Schenkel (22.2, 24.2) zu unter Schließung der Öffnung (32) biegbar ist.

2. Lamelle nach Anspruch 1,
dadurch gekennzeichnet,
daß die Arme (22, 24) und/oder die Schenkel (18, 20) aus biegsamem Werkstoff bestehen.

3. Lamelle nach Anspruch 1 oder 2,
dadurch gekennzeichnet,
daß die Breite d1 der Öffnungen (32) größer ist als die Dicke des Wicklungsdrahtes.

4. Lamelle nach einem der Ansprüche 1 bis 3,
dadurch gekennzeichnet,
daß die Öffnung (32) in Form eines radial sich erstreckenden Schlitzes ausgebildet ist.

5. Lamelle nach einem der Ansprüche 1 bis 4,
dadurch gekennzeichnet,
daß die radial ausgerichteten Schenkel (20) in ihrem Endbereich geschlitzt sind.

6. Lamelle nach einem der Ansprüche 1 bis 5,
dadurch gekennzeichnet,
daß die umfangseitig sich erstreckenden Arme (22, 24) Sollbiegestellen (40) aufweisen.

7. Lamelle nach einem der Ansprüche 1 bis 6,
dadurch gekennzeichnet,
daß der Schlitz (22.3, 24.3) sich nach innen zu verjüngt.

8. Lamelle nach einem der Ansprüche 1 bis 7,
dadurch gekennzeichnet,
daß im Verbindungsbereich der Schenkel (22.1, 22.2; 24.1, 24.2) Soll-Biegestellen (1) der äußeren Schenkel (22.1, 24.1) ausgebildet sind.

9. Lamelle nach einem der Ansprüche 1 bis 8,
dadurch gekennzeichnet,
daß im gebogenen Zustand der äußeren Schenkel (22.1, 24.1) die äußeren Schenkel (22.1, 24.1) sowohl mit den inneren Schenkeln (22.2,24.2) als auch mit den Schenkeln (20), die sich zu ihren freien Enden hin verjüngen, unter Bildung eines Kanals (1.1) für eine Schweißnaht formschlüssig miteinander verbindbar sind.

10. Lamelle nach einem der Ansprüche 1 bis 9,
dadurch gekennzeichnet,
daß im gewickelten Zustand die einander zugewandten Enden der Schenkel (20) und der Arme (22, 24) miteinander z.B. durch Schweißen (42) verbindbar sind.

11. Lamelle nach einem der Ansprüche 1 bis 10,
dadurch gekennzeichnet,
daß die Wicklungsnuten (30) in radialseitige, mit Isolierwerkstoff (44) ausgefüllte und Magnetfelddurchflüsse 46 bildende Nuten übergehen, die sich bis zur Öffnung (12) hin erstrecken.

12. Lamelle nach einem der Ansprüche 1 bis 11,
dadurch gekennzeichnet,
daß die mit magnetfelddurchlässigem Isolierwerkstoff (44) ausgebildeten Nuten (46) jeweils zwei benachbarte Segmente (40,16) betrieblich miteinander verbinden.

13. Verfahren zum Herstellen eines Stators aus Lamellen nach einem der Ansprüche 1 bis 12,
dadurch gekennzeichnet,
daß die Lamellen (10) zu einem Paket (4) zusammengefaßt werden, daß danach die Nuten mit Isolierwerkstoff ausgekleidet und gegebenenfalls axial endseitig hohlzylindrische Schafte angespritzt werden und daß schließlich nach Bewicklung der Wicklungsnuten die Öffnugnen geschlossen werden.

14. Verfahren nach Anspruch 13,
dadurch gekennzeichnet,
daß bei Verwendung von Lamellen mit Magnetfeld-Durchlässen die Beseitigung der radialinnenseitigen Stege durch Schneiden, Zerspanen oder Drehen erfolgt.

15. Stator-Blechpaket für elektrodynamische Maschinen bestehend aus Lamellen nach einem der Ansprüche 1 bis 14.

## Claims

1. Lamination (10) for the magnetic circuit of an electrodynamic machine, having a central opening (12) and segments (14, 16), which are disposed around this opening (12), having radially orientated portions (18, 20), which possibly include circumferentially extending arms (22, 24) and define winding grooves (30), which are accessible from the radial outer surface and have openings (32) provided in the region of the free radial ends of the portions (20), said openings being closable by bending the portions (18, 20) and/or the arms (22, 24), characterised in that the circumferentially extending arms (22, 24) each comprise two portions (22.1, 22.2; 24.1, 24.2), between which a slot (22.3, 24.3) is provided, the external portion (22.1, 24.1) being bendable towards the internal portion (22.2, 24.2) so as to close the opening (32).

2. Lamination according to claim 1, characterised in that the arms (22, 24) and/or the portions (18, 20) are formed from flexible material.

3. Lamination according to claim 1 or 2, characterised in that the width d1 of the openings (32) is greater than the thickness of the winding wire.

4. Lamination according to one of claims 1 to 3, characterised in that the opening (32) is configured in the form of a radially extending slot.

5. Lamination according to one of claims 1 to 4, characterised in that the radially orientated portions (20) are slotted in their end region.

6. Lamination according to one of claims 1 to 5, characterised in that the circumferentially extending arms (22, 24) have intended bending locations (40).

7. Lamination according to one of claims 1 to 6, characterised in that the slot (22.3, 24.3) tapers inwardly.

8. Lamination according to one of claims 1 to 7, characterised in that intended bending locations (1) of the external portions (22.1, 24.1) are provided in the interconnection region of the portions (22.1, 22.2; 24.1, 24.2).

9. Lamination according to one of claims 1 to 8, characterised in that, when the external portions (22.1, 24.1) are in the bent state, the external portions (22.1, 24.1) are interconnectable in a form-fitting manner both with the internal portions (22.2, 24.2) and with the portions (20), which taper towards their free ends, so as to form a channel (1.1) for a weld seam.

10. Lamination according to one of claims 1 to 9, characterised in that, in the wound state, the ends of the portions (20) and of the arms (22, 24) facing one another are interconnectable, e.g. by means of welds (42).

11. Lamination according to one of claims 1 to 10, characterised in that the winding grooves (30) pass into grooves in the radial surface, which grooves are filled with insulating material (44) and form magnetic field passages (46), such grooves extending to the opening (12).

12. Lamination according to one of claims 1 to 11, characterised in that the grooves (46), which are provided with insulating material (44) permeable to magnetic fields, each operationally connect two adjacent segments (14, 16) to each other.

13. Method of producing a stator from laminations according to one of claims 1 to 12, characterised in that the laminations (10) are combined to form a stack (4), in that the grooves are then filled with insulating material, and hollow-cylindrical shafts are possibly injection-moulded axially and terminally, and in that finally the openings are closed after the winding grooves have been wound.

14. Method according to claim 13, characterised in that, when laminations having magnetic field passages are used, the webs on the radial inner surface are removed by cutting, machining or turning.

15. Stack of stator plates for electrodynamic machines, comprising laminations according to one of claims 1 to 14.

## Revendications

1. Lamelle (10) pour le circuit magnétique d'une machine électrodynamique avec une ouverture centrale (12) ainsi qu'avec des segments (14, 16) disposés autour de cette ouverture (12) avec des branches (18, 20) orientées radialement, branches qui le cas échéant présentent des bras (22, 24) disposés à la périphérie, branches qui conjointement avec des ouvertures (32) formées dans la région des extrémités radiales libres des bras (20) définissent des encoches (30) pour bobinages accessibles depuis l'extérieur, encoches qui peuvent être fermées par le cintrage des branches (18, 20) et/ou par le cintrage des bras (22, 24),
caractérisée
en ce que les bras (22, 24) situés à la périphérie sont chacun constitués de deux ailes (22.1, 22.2; 24.2) entre lesquelles est formée une fente (22?3, 24.3), où l'aile extérieure (22.1, 24.1) peut être cintrée vers l'aile intérieure (22.2, 24.2), avec fermeture de l'ouverture (32).

2. Lamelle suivant la revendication 1,
caractérisée
en ce que les bras (22, 24) et/ou les branches (18, 20) sont en un matériau flexible.

3. Lamelle suivant la revendication 1 ou la revendication 2,
caractérisée
en ce que la largeur d1 des ouvertures (32) est plus grande que l'épaisseur du fil de bobinage.

4. Lamelle suivant l'une quelconque des revendications de 1 à 3,
caractérisée
en ce que l'ouverture (32) a la forme d'une fente orientée radialement.

5. Lamelle suivant l'une quelconque des revendications de 1 à 4,
caractérisée
en ce que la branche (20) orientée radialement est fendue dans sa zone terminale.

6. Lamelle suivant l'une quelconque des revendications de 1 à 5,
caractérisée
en ce que les branches (22, 24) disposées à la périphérie présentent des zones de cintrage de consigne (40).

7. Lamelle suivant l'une quelconque des revendications de 1 à 6,
caractérisée
en ce que la fente (22.3, 24.3) diminue de largeur en direction de l'intérieur.

8. Lamelle suivant l'une quelconque des revendications de 1 à 7,
caractérisée
en ce que dans la région de liaison des branches (22.1, 22.2; 24.1, 24.2) sont formées des zones de cintrage de consigne (1) des branches extérieures (22.1, 24.1).

9. Lamelle suivant l'une quelconque des revendications de 1 à 8,
caractérisée
en ce que dans la position cintrée des branches extérieures (22.1, 24.1), les branches extérieures (22.1, 24.1) peuvent, avec formation d'un conduit (1.1) pour un cordon de soudure, être reliées par similarité de forme tant aux branches intérieures (22.2, 24.2) qu'également aux branches (20) qui s'amincissent en direction de leurs extrémités libres.

10. Lamelle suivant l'une quelconque des revendications de 1 à 9,
caractérisée
en ce qu'à l'état bobiné, les extrémités orientées les unes vers les autres des branches (20) et des bras (22, 24) peuvent être reliées mutuellement par exemple par soudage (42).

11. Lamelle suivant l'une quelconque des revendications de 1 à 10,
caractérisée
en ce que les encoches de bobinage (30) se prolongent par des encoches situées du côté radial, remplies d'un matériau isolant (44) et constituant des chemins de passage de flux magnétique, ces encoches s'étendant jusqu'à l'ouverture (12).

12. Lamelle suivant l'une quelconque des revendications de 1 à 11,
caractérisée
en ce que les encoches (46) remplies d'un matériau isolant (44) perméable au champ magnétique relient chacune fonctionnellement deux segments voisins (40, 16).

13. Procédé de fabrication d'un stator à partir de lamelles suivant l'une quelconque des revendications de 1 à 12,
caractérisé
en ce que les lamelles (10) sont réunies en un paquet (4), qu'ensuite les encoches sont revêtues d'un matériau isolant et que le cas échéant des tiges à cylindre creux sont ajoutées par injection côté axial terminal et que, pour finir, et après bobinage des encoches de bobinage, les ouvertures sont obturées.

14. procédé suivant la revendication 11,
caractérisé
en ce que dans le cas de l'utilisation de lamelles perméables au champ magnétiques, la suppression des nervures situées à l'intérieur côté radial a lieu par des opérations de coupe, d'enlèvement de copeaux ou de tournage.

15. Paquet de tôles de stator pour machines électrodynamiques comprenant des lamelles suivant l'une quelconque des revendications de 1 à 14.
